# EUROPÄISCHE PATENTSCHRIFT

(11) **EP 1 401 651 B1**
(45) Veröffentlichungstag und Bekanntmachung des Hinweises auf die Patenterteilung: **19.04.2006**
(21) Anmeldenummer: 02754179.6
(22) Anmeldetag: 29.05.2002
(51) Int. Cl.: B32B 25/04

(54) **VERFAHREN ZUR HERSTELLUNG EINES VERBUNDKÖRPERS, EIN VERBUNDKÖRPER SOWIE EINE GUMMIMISCHUNG**
METHOD FOR PRODUCING A COMPOSITE BODY, A COMPOSITE BODY AND A RUBBER BLEND
PROCEDE DE FABRICATION D'UN CORPS COMPOSITE, CORPS COMPOSITE Y RELATIF ET MELANGE DE CAOUTCHOUC

(30) Priorität: 29.05.2001 DE 10126279
(43) Veröffentlichungstag der Anmeldung: 31.03.2004
(73) Patentinhaber: Firma Schomburg + Graf GmbH & Co. KG, 42277 Wuppertal (DE); Senzlober, Michael, 42277 Wuppertal (DE); Maczewski, Frank, 42283 Wuppertal (DE)
(72) Erfinder: SENZLOBER, Michael, 42277 Wuppertal (DE); MACZEWSKI, Frank, 42283 Wuppertal (DE)
(74) Vertreter: Pfingsten, Dieter
(86) Internationale Anmeldenummer: PCT/DE2002/001976
(87) Internationale Veröffentlichungsnummer: WO 2002/096642

(56) Entgegenhaltungen:
- EP-A- 0 614 940
- PATENT ABSTRACTS OF JAPAN vol. 008, no. 114 (C-225), 26. Mai 1984 (1984-05-26) & JP 59 027935 A (MITSUI SEKIYU KAGAKU KOGYO KK), 14. Februar 1984 (1984-02-14)

## Beschreibung

Die Erfindung betrifft ein Verfahren zur Herstellung eines Verbundkörpers nach dem Oberbegriff des Anspruch 1, einen Verbundkörper nach dem Oberbegriff des Anspruchs 7 sowie eine Formsohle nach dem Oberbegriff des Anspruchs 8.

Insoweit ist das Verfahren z. B. durch die DE- 196 42 212 A1 bekannt. Dabei wird das Problem, dass Kautschuk und Polyurethan nicht miteinander haften, zur Herstellung einer Formsohle für Schuhwerk dadurch gelöst, dass in die Oberfläche der Gummischicht ein Vlies eingearbeitet wird, dessen Fasem sich auf der anderen Seite mit dem Polyurethan verbinden. Die Haftung zwischen der Gummischicht und der Polyurethan-Schicht hängt hier von der Einbindung der Fasern des Vlies untereinander sowie jeweils in die Gummischicht bzw. Zwischenschicht ab.

Als Stand der Technik wird zur Herstellung von Formsohlen in der DE-196 42 212 A1 weiterhin beschrieben, dass die Zwischenschicht unter Verwendung von Klebstoffen auf die Gummischicht aufgeklebt werden kann.

Alternativ ist es möglich, durch Erwärmen und Vorbehandlung mit halogenabspaltenden Substanzen (Chlor, Brom, Jod) die Haftung der Gummischicht gegenüber der

Polyurethan-Schicht soweit zu erhöhen, dass durch anschließendes Aufschäumen des Polyurethan eine gute Verbindung entsteht, die nicht zerstörungsfrei gelöst werden kann.

Diese Chlor(Brom/Jod)-Behandlung und die anschließende Wärmebehandlung der Gummischicht muss durch Arbeitskräfte erfolgen und ist daher aus verständlichen arbeitsphysiologischen Gründen ebenso unbeliebt wie fehlerbehaftet.

Die Aufgabe der Erfindung besteht darin, ein Verfahren und eine Gummimischung sowie einen Verbundkörper zu schaffen, bei dem das Polyurethan auf den vorgefertigten Gummiformling ohne Verwendung von Klebemitteln, ohne Verwendung von Zwischenschichten und ohne Zwischenbehandlung des Gummiformlings zur Erhöhung der Haftung aufgeschäumt werden kann.

Die Lösung ergibt sich aus Anspruch 1, Anspruch 7 und Anspruch 8.

Durch die EP 0614 940 A2 sowie die von demselben Anmelder stammende JP59 027 935 ist es bekannt, ein mit Polyurethan beschichtbares Elastomer durch Wärmebehandlung einer Mischung herzustellen, die neben dem besagten Elastomer ungesättigte Carbonsäure in Anwesenheit eines organischen Peroxids mit einem Monomer mit wenigstens einer Amino - Gruppe enthält.

Bei dem Verfahren nach der Erfindung entfällt sowohl die chemische Aktivierung z. B. durch Halogen (Chlor u.a.)-Behandlung der Gummischicht zur Verbesserung der Haftung zwischen Gummi und Polyurethan wie auch das Einlegen einer Zwischenschicht z. B. aus Vlies oder das Verkleben mit einem Klebstoff.

Die Auswahl von Kautschukmassen hoher Polarität mit einem vermehrten Anteil an polaren Substituenten wie beispielsweise Brom, Chlor oder Cyanid (CN) Sulfochlorid, Ether ist eine Maßnahme, welche jedoch die Zumischung besonderer Verarbeitungshilfsmittel und Füllstoffe erforderlich macht, um einerseits ungünstige Eigenschaften dieser Kautschukarten, wie z. B. Versprödung und zum anderen ungünstige Verarbeitseigenschaften auszugleichen. Als derartiger Vulkanisationsaktivator und Verarbeitungshilfsmittel dient üblicher Weise Stearinsäure. Die Verarbeitseigenschaften werden nach der Erfindung jedoch nicht durch Erhöhung, sondern durch eine erhebliche Verminderung des Stearinsäuregehalts in der Gummimischung und andererseits durch die Zumischung eines polaren Kautschuks bewirkt.

Die Stearinsäure- oder allgemein: Fettsäurezumischung ist ebenfalls eine gängige Maßnahme und gilt als unverzichtbar, um die Verarbeitung einerseits und/ oder andererseits die Vernetzungsreaktion der Gummimischung zu ermöglichen bzw. zu fördem. Dies gilt insbesondere bei hochpolaren Kautschukarten. Die Verminderung des Stearinanteils nach der Weiterbildung der Erfindung nach Anspruch 2,3 ist daher eine ungewöhnliche Maßnahme, die der Fachmann in dieser Kombination ablehnt. Andererseits ist die Zumischung eines unpolaren Kautschuks (Anspruch 1, 4 und 5) eine Maßnahme, die der Verwendung eines polaren Kautschuks zu widersprechen scheint. Es hat sich jedoch herausgestellt, dass hierdurch die Verarbeitung und die Eigenschaften der hochpolaren Kautschuke soweit verbessert werden können, dass die Vermindung des Stearinsäureanteils ausgeglichen wird bzw. unabhängig vom Stearinsäureanteil ist oder sogar zu einer weiteren Verbesserung der Eigenschaften und Verarbeitungseigenschaften des hochpolaren Kautschuks führt.

Abgesehen von den durch diese Erfindung vorgeschlagenen Besonderheiten wird die Gummimischung wie üblich hergestellt. Es wird ein Gewichtsverhältnis von ca. 1:1 zwischen Kautschukmasse und Füllstoffen/Hilfsstoffen bevorzugt (Anspruch 6).

Als Füllstoffe kommen insbesondere Ruß, Kreide und Kieselsäure in Betracht.

Hilfsmittel sind insbesondere: Alterungsschutzmittel, Weichmacher, Vernetzungsmittel und Beschleunigungsmittel für die Vernetzung des Kautschuks, insbesondere Schwefel, Katalysatoren und Vulkanisationsbeschleuniger, Vulkanisationsaktivatoren, Verarbeitungshilfsmittel insbesondere für die Kalandrierung, Mischung und Pressung der Gummimasse sowie ihre Ablösung von den Metallteilen, Aktivierungsmittel zur Aktivierung der Füllstoffe (Füllstoffaktivatoren) o.a.,

Die Herstellung der Verbundkörper geschieht wie folgt:

Zunächst wird die Kautschukrohmasse in Knetern zu der gewünschten Mischung verarbeitet. Nach dem Mischen wird die Rohmasse durch Mischwalzen homogenisiert, wobei hier Schwefel zudosiert wird. Anschließend wird die in Form von Plattenrohlingen vorliegende Gunimimischung in nachgeschalteten Anlageteilen wie Kalanderwalzen, Streifenschneidmaschinen Barwel o.ä. konfektioniert und so zugeschnitten, dass die Rohlinge das richtige Gewicht für die herzustellenden Verbundkörper bzw. dessen Gummischicht haben. Die Rohlinge werden sodann unter Druck und bei einer Temperatur von ca. 160° C vulkanisiert und zu der gewünschten Gummischicht in Form eines Gummiformtings verpresst (Compression molding, Transfer - molding, Injection - molding und sonstige darauf basierende Formgebungs - und Vulkanisationsverfahren).

Nach Reinigung werden diese Gummiformlinge ohne weitere Zwischenbehandlung in die Unterform einer Polyurethan-Gießmaschine eingelegt und dort mit den gemischten Komponenten für die Polyurethanherstellung zur Reaktion gebracht. Die Polyurethan-Komponenten werden in flüssigem Zustand zusammengeführt und kurz vor der Austrittsdüse gemischt. Aus der Austrittsdüse wird das Gemisch auf den in der Form befindlichen Gummiformling gespritzt und sodann die Oberform geschlossen. Innerhalb kurzer Zeit (ca. 9 Sek.) erfolgt das Aufschäumen und Ausreagieren des Polyurethans auf der Gummivulkanisatoberfläche des Formlings zu einem Verbundkörper bei einem Druck von ca. 6 bar, durch welchen die Gummischicht in die Unterform und die aufgeschäumte Polyurethanschicht auf die Gummischicht gedrückt und mit dieser ablösesicher verbunden wird.

Mit diesem Verfahren entstehen Verbundkörpern, die insbesondere als Schuhsohlen - und wegen der guten Haftung - für Sicherheitsschuhe geeignet sind. Die hochpolaren Kautschukarten haben dabei den Vorfeil, daß die Quellung durch Benzine oder Öle recht gering und die Verschleißfestigkeit und Haltbarkeit sehr gut ist.

An Kautschuksorten kommen für die Herstellung des Gummivulkanisats in Betracht:
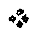 Naturkautschuk (NR) ist extrem unpolar.
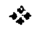 Butadienkautschuk (Buna, BR) ist ebenfalls weitgehend unpolar.
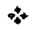 Styrol Butadienkautschuk (SBR) ist auch unpolar.
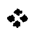 Chloroprene (CR) zeichnen sich durch höhere Polarität aus.
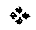 Nitril-Butadienkautschuke/ AcrylNitril-Butadienkautschuke NBR haben eine weiter gesteigerte Polarität.
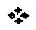 Carboxylierter NBR hat ebenfalls eine hohe Polarität, ist jedoch außerdem noch besonders verschleißfest und stellt insofern eine Alternative zu NBR dar.
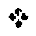 Chlorsulfoniertes Polyethylen (CSM)
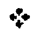 Chloriertes Polyethylen (CM).

Die fünf zuletzt geschilderten Kautschuktypen haben daher eine in dieser Reihenfolge gesteigerte Polarität.

Die Polarität beruht auf der Anzahl der polaren Substituenten. Dabei handelt es sich im Falle von CR und CM um Chlor (Cl), im Falle von NBR um Cyanid (CN), im Falle von X-NBR um Cyanid (CN) und Carboxyl (COOH) und im Falle von CSM um Sulfochlorid (SO₂CL) sowie Chlor (CL).

## Patentansprüche

1. Verfahren zur Herstellung eines Verbundkörpers, welcher aus einer Gummischicht und aus einer damit verbundenen Polyurethan-Schicht besteht,
durch Herstellen einer geeigneten Gummimischung, welche aus einer Kautschukmasse sowie Füllstoffen und Verarbeitungshilfsmitteln einschließlich Stearinsäure besteht,
durch Verpressen der Kautschukmasse zu einem Gummiformling und durch Aufschäumen des Polyurethans auf den Gummiformling,
**gekennzeichnet durch**
Einsatz einer Gummimischung, deren Kautschukmasse **durch** Anreicherung der polaren Substituenten eine erhöhte Polarität besitzt,
und welche eine Zugabe eines weitgehend unpolaren Kautschuks hat.

2. Verfahren nach Anspruch 1,
**dadurch gekennzeichnet, daß**
der Stearinanteil in der Gummimischung kleiner als 0,8% des Gewichts der Gummimischung bzw. kleiner als 1,4% des Gewichts der Kautschukmasse ist.

3. Verfahren nach Anspruch 1,
**dadurch gekennzeichnet, daß**
der Stearinanteil in der Gummimischung kleiner als 0,5% des Gewichts der Gummimischung bzw. kleiner als 1 % des Gewichts der Kautschukmasse ist.

4. Verfahren nach Anspruch 1, 2 oder 3
**dadurch gekennzeichnet, daß**
Der Anteil des unpolaren Kautschuks in der Gummimischung kleiner als 5%, vorzugsweise kleiner als 4% des Gewichts der Gummimischung bzw. kleiner als 2,5%, vorzugsweise kleiner als 2% des Gewichts der Kautschukmasse ist.

5. Verfahren nach einem der Ansprüche 1 bis 4
**dadurch gekennzeichnet, daß**
Der unpolaren Kautschuk ein Butadienkautschuk (BR) ist.

6. Verfahren nach einem der Ansprüche 1 bis 5
**dadurch gekennzeichnet, daß**
Die Kautschukmasse einerseits sowie Füllstoffe und Verarbeitungshilfsmittel einschließlich Stearinsäure andererseits im Verhältnis von ungefähr 1:1 gemischt sind.

7. Verbundkörper, welcher aus einer Gummischicht und aus einer Polyurethan-Schicht besteht, welche ohne eine Zwischenschicht durch Aufschäumen auf die Gummischicht mit dieser unmittelbar verbunden ist,
wobei die Gummischicht aus einer für die Zweck des Verbundkörpers geeigneten Gummimischung aus einer Kautschukmasse sowie Füllstoffen und Verarbeitungshilfsmitteln einschließlich Stearinsäure besteht,
**dadurch gekennzeichnet, daß**
die Gummischicht aus einer Gummimischung mit der Zusammensetzung nach einem der Ansprüche 1 bis 6 hergestellt ist, und daß die Polyurethan-Schicht mit der Gummischicht ohne chemische Vorbehandlung der Gummischicht, ohne Zwischenschicht sowie ohne Klebemittel durch Aufschäumen unmittelbar verbunden ist.

8. Formsohle für Schuhwerk
welche aus einer Gummischicht und aus einer Polyurethan-Schicht besteht, welche ohne eine Zwischenschicht durch Aufschäumen auf die Gummischicht mit dieser unmittelbar verbunden ist,
wobei die Gummischicht aus einer für die Zweck des Verbundkörpers geeigneten Gummimischung aus einer Kautschukmasse sowie Füllstoffen und Verarbeitungshilfsmitteln einschließlich Stearinsäure besteht,
**dadurch gekennzeichnet, daß**
die Gummischicht aus einer Gummimischung mit der Zusammensetzung nach einem der Ansprüche 1 bis 6 hergestellt ist, und daß die Polyurethan-Schicht mit der Gummischicht ohne chemische Vorbehandlung der Gummischicht, ohne Zwischenschicht sowie ohne Klebemittel durch Aufschäumen unmittelbar verbunden ist.

## Revendications

1. Procédé de fabrication d'un corps composite constitué d'une couche de caoutchouc et une couche de polyuréthanne assemblée à cette dernière, par fabrication d'un mélange approprié de caoutchoucs, qui est constitué d'une masse de caoutchouc, ainsi que de charges et d'auxiliaires de mise en oeuvre, y compris de l'acide stéarique, par compression de la masse de caoutchouc pour donner une ébauche de caoutchouc, et par expansion du polyuréthanne sur l'ébauche de caoutchouc, **caractérisé par** l'utilisation d'un mélange de caoutchoucs dont la masse de caoutchouc présente, grâce à l'enrichissement des substituants polaires, une polarité accrue, et qui a été additionné d'un caoutchouc fortement apolaire.

2. Procédé selon la revendication 1, **caractérisé en ce que** la proportion de stéarine dans le mélange de caoutchoucs est inférieure à 0,8 % du poids du mélange de caoutchoucs, ou inférieure à 1,4 % du poids de la masse de caoutchouc.

3. Procédé selon la revendication 1, **caractérisé en ce que** la proportion de la stéarine dans le mélange de caoutchoucs est inférieure à 0,5 % du poids du mélange de caoutchoucs ou inférieure à 1 % du poids de la masse de caoutchouc.

4. Procédé selon la revendication 1, 2 ou 3, **caractérisé en ce que** la proportion du caoutchouc apolaire dans le mélange de caoutchoucs est inférieure à 5 %, de préférence inférieure à 4 % du poids du mélange de caoutchoucs, ou inférieure à 2,5 %, de préférence inférieure à 2 % du poids de la masse de caoutchouc.

5. Procédé selon l'une des revendications 1 à 4, **caractérisé en ce que** le caoutchouc apolaire est un caoutchouc butadiène (BR).

6. Procédé selon l'une des revendications 1 à 5, **caractérisé en ce que** la masse de caoutchouc d'une part, ainsi que les charges et les auxiliaires de mise en oeuvre y compris l'acide stéarique d'autre part, sont mélangés selon un rapport d'environ 1:1.

7. Corps composite qui est constitué d'une couche de caoutchouc et d'une couche de polyuréthanne, qui sans couche intermédiaire, et par expansion sur la couche de caoutchouc, est directement assemblée à cette dernière, la couche de caoutchouc étant constituée d'un mélange de caoutchoucs convenant aux applications du corps composite, ce mélange de caoutchoucs étant lui-même constitué d'une masse de caoutchouc, ainsi que de charges et d'auxiliaires de mise en oeuvre, y compris de l'acide stéarique, **caractérisé en ce que** la couche de caoutchouc est fabriquée à partir d'un mélange de caoutchoucs ayant la composition selon l'une des revendications 1 à 6, et que la couche de caoutchouc est assemblée directement à la couche de caoutchouc sans traitement chimique préalable de la couche de caoutchouc, sans couche intermédiaire, et aussi sans adhésif, par expansion.

8. Semelle moulée pour chaussure, qui est constituée d'une couche de caoutchouc et d'une couche de polyuréthanne, qui sans couche intermédiaire et par expansion sur la couche de caoutchouc est directement assemblée à cette dernière, la couche de caoutchouc étant constituée d'un mélange de caoutchoucs convenant aux utilisations du corps composite, ce mélange de caoutchoucs étant lui-même constitué d'une masse de caoutchouc, ainsi que de charges et d'auxiliaires de mise en oeuvre, y compris de l'acide stéarique, **caractérisée en ce que** la couche de caoutchouc est fabriquée à partir d'un mélange de caoutchoucs ayant la composition selon l'une des revendications 1 à 6, et que la couche de polyuréthanne est assemblée directement sans expansion à la couche de caoutchouc sans traitement chimique préalable de la couche de caoutchouc, sans couche intermédiaire, et sans adhésif.

## Claims

1. Process for production of a composite product which is composed of a rubber layer and of a polyurethane layer bonded thereto,
via preparation of a suitable rubber mixture which is composed of a rubber composition and also of fillers and of processing aids including stearic acid,
via compression of the rubber composition to give a rubber moulding and via foaming of the polyurethane onto the rubber moulding,
**characterized in that**
a rubber mixture used has increased rubber-composition polarity via an increase in the concentration of the polar substituents,
and comprises an addition of a substantially non-polar rubber.

2. Process according to Claim 1,
**characterized in that**
the stearic content in the rubber mixture is smaller than 0.8% of the weight of the rubber mixture and, respectively, smaller than 1.4% of the weight of the rubber composition.

3. Process according to Claim 1,
**characterized in that**
the stearic content in the rubber mixture is smaller than 0.5% of the weight of the rubber mixture and, respectively, smaller than 1% of the weight of the rubber composition.

4. Process according to Claim 1, 2 or 3,
**characterized in that**
the content of the non-polar rubber in the rubber mixture is smaller than 5%, preferably smaller than 4%, of the weight of the rubber mixture and, respectively, smaller than 2.5%, preferably smaller than 2%, of the weight of the rubber composition.

5. Process according to any of Claims 1 to 4,
**characterized in that**
the non-polar rubber is a butadiene rubber (BR).

6. Process according to any of Claims 1 to 5,
**characterized in that**
the rubber composition on the one hand, and also fillers and processing aids including stearic acid on the other hand, have been mixed in a ratio of about 1:1.

7. Composite product, which is composed of a rubber layer and of a polyurethane layer which, without any intermediate layer, has been bonded directly to the rubber layer via foaming onto the rubber layer,
where the rubber layer is composed of a rubber mixture suitable for the purposes of the composite product and composed of a rubber composition, and also of fillers and of processing aids including stearic acid,
**characterized in that**
the rubber layer has been produced from a rubber mixture with the constitution according to any of Claims 1 to 6, and **in that** the polyurethane layer has been bonded directly to the rubber layer via foaming without chemical pretreatment of the rubber layer, without any intermediate layer, and also without adhesives.

8. Moulded sole for shoes
which is composed of a rubber layer and of a polyurethane layer which, without any intermediate layer, has been bonded directly to the rubber layer via foaming onto the rubber layer,
where the rubber layer is composed of a rubber mixture suitable for the purposes of the composite product and composed of a rubber composition, and also of fillers and of processing aids including stearic acid,
**characterized in that**
the rubber layer has been produced from a rubber mixture with the constitution according to any of Claims 1 to 6, and **in that** the polyurethane layer has been bonded directly to the rubber layer via foaming without chemical pretreatment of the rubber layer, without any intermediate layer, and also without adhesives.
